# EUROPEAN PATENT SPECIFICATION

(11) **EP 3 742 591 B1**
(45) Date of publication and mention of the grant of the patent: **06.07.2022**
(21) Application number: 18901752.8
(22) Date of filing: 18.01.2018
(51) Int. Cl.: H02K 9/06, H02K 15/02, H02K 1/22, H02K 21/04, H02K 15/03

(54) **ROTOR OF ROTATING ELECTRIC MACHINE FOR VEHICLE AND METHOD FOR MANUFACTURING SAME**
ROTOR FÜR EINE ELEKTRISCHE DREHMASCHINE FÜR EIN FAHRZEUG UND VERFAHREN ZUR HERSTELLUNG DAVON
ROTOR DE MACHINE ÉLECTRIQUE TOURNANTE POUR VÉHICULE ET SON PROCÉDÉ DE FABRICATION

(43) Date of publication of application: 25.11.2020
(73) Proprietor: Mitsubishi Electric Corporation, Tokyo 100-8310 (JP)
(72) Inventor: KAWASHIMA, Tatsuki, Tokyo 100-8310 (JP); YOSHIZAWA, Toshiyuki, Tokyo 100-8310 (JP); KASHIHARA, Toshiaki, Tokyo 100-8310 (JP); SAKAGUCHI, Masayuki, Tokyo 102-0073 (JP)
(74) Representative: Hoffmann Eitle
(86) International application number: PCT/JP2018/001376
(87) International publication number: WO 2019/142286

(56) References cited:
- WO-A1-2005/072902
- JP-A- H0 556 616
- JP-A- H01 170 352
- JP-A- H06 284 638
- JP-A- H10 271 780
- JP-A- 2004 153 975
- JP-A- 2005 204 484
- JP-A- 2007 282 301
- JP-A- 2007 282 301
- JP-A- 2010 110 169
- JP-A- 2010 252 560
- US-A- 6 037 695
- US-A1- 2009 079 294

## Description

### TECHNICAL FIELD

The present invention relates to a rotor of a rotating electric machine for vehicle and a method for manufacturing the same.

### BACKGROUND ART

As a rotor of a rotating electric machine for vehicle such as an AC electric generator, a rotor using a Lundell-type rotor core is known. A pair of Lundell-type cores each have a plurality of claw-shaped magnetic poles around the outer circumference thereof, and are arranged so as to be opposed to each other in the axial direction with their claw-shaped magnetic poles engaged with each other. Permanent magnets are provided between the claw-shaped magnetic poles adjacent to each other in the circumferential direction, to prevent leakage of a magnetic flux between the claw-shaped magnetic poles.

As a conventional example of a rotor using a Lundell-type core, Patent Document 1 discloses a rotor in which each claw-shaped magnetic pole has flange portions protruding in the circumferential direction at the outer-diameter-side end, to inhibit permanent magnets from moving in the centrifugal direction.

As a conventional method for manufacturing a rotor of a rotating electric machine for vehicle, Patent Document 2 discloses a method in which, before a rotor shaft is press-fitted to a pair of claw-shaped magnetic poles provided so as to be opposed to each other, permanent magnets are inserted between the claw-shaped magnetic poles. In addition, Patent Document 3 discloses a method in which, before a cooling fan is welded to an axial-direction end surface of a rotor core, permanent magnets are inserted between claw-shaped magnetic poles.

Further, Patent Document 4 discloses a method in which, at the time of fixing a cooling fan to an axial-direction end surface of a rotor core, resistance welding is performed with a plus-side welding electrode and a minus-side welding electrode both in contact with one surface of the cooling fan. According to Patent Document 4, simultaneous welding at two locations, which has conventionally required two pairs of welding electrodes, can be performed with one pair of welding electrodes, and welding current can be reduced.

### CITATION LIST

### PATENT DOCUMENT

Patent Document 1: Japanese Laid-Open Patent Publication No. 2013-162668
Patent Document 2: CN102738978
Patent Document 3: CN101789652
Patent Document 4: Japanese Laid-Open Patent Publication No. 2010-74982

US 6 037 695 A, JP 2007/282301 A, US 2009/079294 A1, and JP 2004/153975 A are further prior art.

### SUMMARY OF THE INVENTION

### PROBLEMS TO BE SOLVED BY THE INVENTION

In the rotors configured as described above, each permanent magnet is magnetized in such a direction as to reduce a leakage magnetic flux between the claw-shaped magnetic poles adjacent to each other with the permanent magnet therebetween. Meanwhile, as shown in Patent Document 2 and Patent Document 3, in the conventional rotor manufacturing methods, a cooling fan is fixed to the axial-direction end surface of the rotor core by resistance welding after permanent magnets are inserted between the claw-shaped magnetic poles.

At this time, due to a magnetic field caused by large current in the welding, a trouble in which the permanent magnets are demagnetized or are magnetized in undesired directions occurs. In the rotor manufacturing method disclosed in Patent Document 4, the welding current is reduced so that unnecessary magnetization of the permanent magnets is suppressed, but the influence of a magnetic field caused by the welding current cannot be completely prevented.

Even a welding method such as laser welding not using current causes a trouble in which permanent magnets are demagnetized by heat input. If the permanent magnets are demagnetized or are magnetized in undesired directions, a magnetic flux is not assuredly passed between the stator and the claw-shaped magnetic poles, thus causing a problem of increase in a leakage magnetic flux.

The present invention has been made to solve the above problem, and an object of the present invention is to provide a rotor of a rotating electric machine for vehicle and a manufacturing method therefor that enable the rotor to be manufactured while welding of a cooling fan does not influence the magnetic force of permanent magnets.

### SOLUTION TO THE PROBLEMS

The invention is defined by the independent claims.

A rotor of a rotating electric machine for vehicle according to the present invention includes: a pair of rotor cores each having a plurality of claw-shaped magnetic poles at an outer circumference thereof, the pair of rotor cores being provided so as to be opposed to each other in an axial direction such that the claw-shaped magnetic poles of the pair of rotor cores are engaged with each other; a rotor shaft to which the pair of rotor cores are fixed; a bar-shaped permanent magnet provided at a magnet holding portion formed by the claw-shaped magnetic poles adjacent to each other in a circumferential direction; and cooling fans fixed to axial-direction end surfaces of the pair of rotor cores, wherein the cooling fan fixed to the axial-direction end surface of at least one of the pair of rotor cores is located so as not to interfere with an area on an extension line in a longitudinal direction of the permanent magnet.

A method for manufacturing a rotor of a rotating electric machine for vehicle according to the present invention includes the steps of: press-fitting a rotor shaft into a pair of rotor cores each having a plurality of claw-shaped magnetic poles at an outer circumference thereof, the pair of rotor cores being provided so as to be opposed to each other in an axial direction such that the claw-shaped magnetic poles of the pair of rotor cores are engaged with each other; fixing cooling fans, by welding, to axial-direction end surfaces of the pair of rotor cores into which the rotor shaft has been press-fitted; and inserting a bar-shaped permanent magnet into a magnet holding portion formed by the claw-shaped magnetic poles adjacent to each other in a circumferential direction of the pair of rotor cores to which the cooling fans have been fixed, from an axial-direction end surface side of at least one of the pair of rotor cores, wherein the cooling fan fixed to the axial-direction end surface, of the pair of rotor cores, on a side to which the permanent magnet is inserted is located so as not to interfere with an insertion path through which the permanent magnet is inserted into the magnet holding portion.

### EFFECT OF THE INVENTION

In rotor of a rotating electric machine for vehicle according to the present invention, the cooling fan fixed to the axial-direction end surface of at least one of the pair of rotor cores is located so as not to interfere with the area on the extension line in the longitudinal direction of the permanent magnet. Therefore, it is possible to provide the permanent magnets into the magnet holding portions in a state in which the cooling fans are fixed to the axial-direction end surfaces. Thus, the permanent magnets are not influenced by a magnetic field or heat caused when the cooling fans are welded. Therefore, leakage of a magnetic flux between the claw-shaped magnetic poles can be assuredly prevented.

In the method for manufacturing the rotor of a rotating electric machine for vehicle according to the present invention, the permanent magnet is inserted into the magnet holding portion after the cooling fans are fixed to the axial-direction end surfaces of the pair of rotor cores by welding. Thus, the manufacturing can be performed while welding of the cooling fans does not influence the magnetic force of the permanent magnets, and leakage of a magnetic flux between the claw-shaped magnetic poles can be assuredly prevented.

Objects, features, aspects and effects of the present invention other than the above ones will become more apparent from the following detailed description of the present invention when taken in conjunction with the accompanying drawings.

### BRIEF DESCRIPTION OF THE DRAWINGS

[FIG. 1] FIG. 1 is a front view of a rotating electric machine for vehicle according to example 1 not falling under the scope of claim 1.
[FIG. 2] FIG. 2 is a sectional view of the rotating electric machine for vehicle according to example 1.
[FIG. 3] FIG. 3 is a side view of a rotor of the rotating electric machine for vehicle according to example 1 in a state in which permanent magnets are not placed.
[FIG. 4] FIG. 4 is a partial side view showing claw-shaped magnetic poles and permanent magnets of the rotor of the rotating electric machine for vehicle according to example 1 .
[FIG. 5] FIG. 5 is a partial sectional view showing the claw-shaped magnetic poles and the permanent magnet of the rotor of the rotating electric machine for vehicle according to example 1 .
[FIG. 6] FIG. 6 is a partial sectional view showing a modification of the claw-shaped magnetic poles and the permanent magnet of the rotor of the rotating electric machine for vehicle according to example 1 .
[FIG. 7] FIG. 7 is a sectional view illustrating a method for manufacturing the rotor of the rotating electric machine for vehicle according to example 1 .
[FIG. 8] FIG. 8 is a sectional view illustrating the method for manufacturing the rotor of the rotating electric machine for vehicle according to example 1.
[FIG. 9] FIG. 9 is a schematic view showing an axial-direction end surface of the rotor of the rotating electric machine for vehicle according to example 1 .
[FIG. 10] FIG. 10 is a sectional view showing a rotor of a rotating electric machine for vehicle according to embodiment 1 of the present invention.
[FIG. 11] FIG. 11 is a schematic view showing an axial-direction end surface of the rotor of the rotating electric machine for vehicle according to embodiment 1 of the present invention.

### DESCRIPTION OF EMBODIMENTS

### Example 1

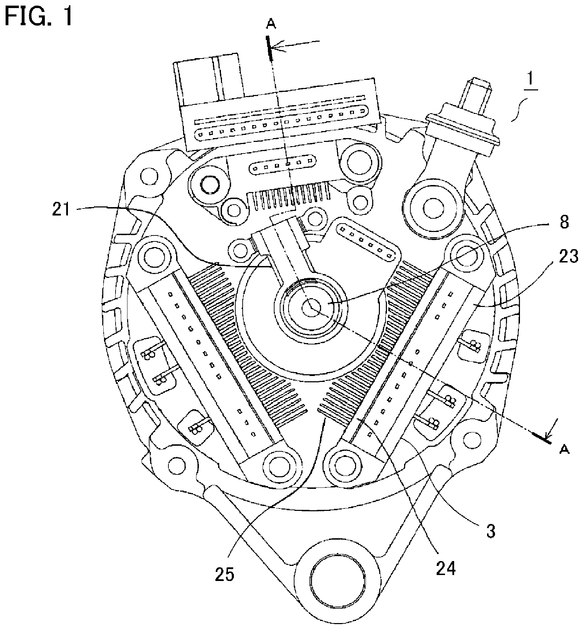

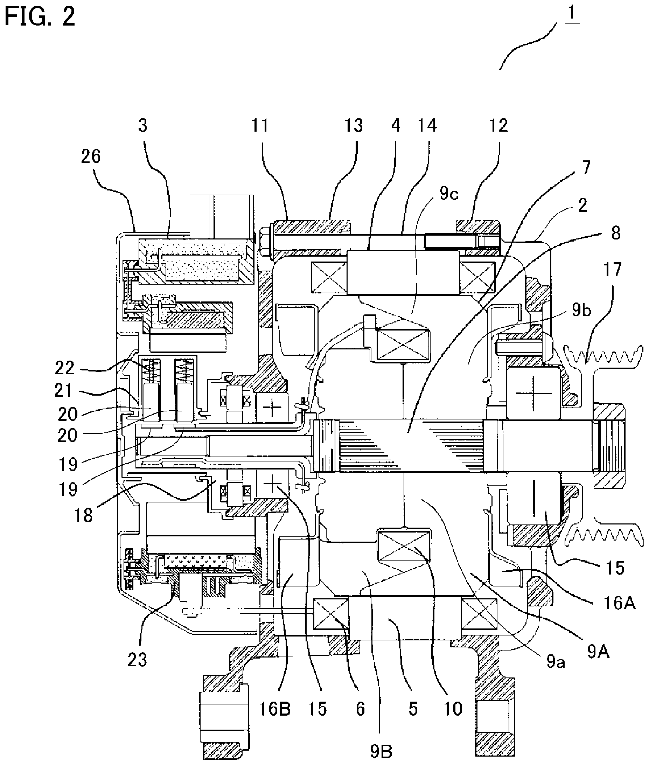

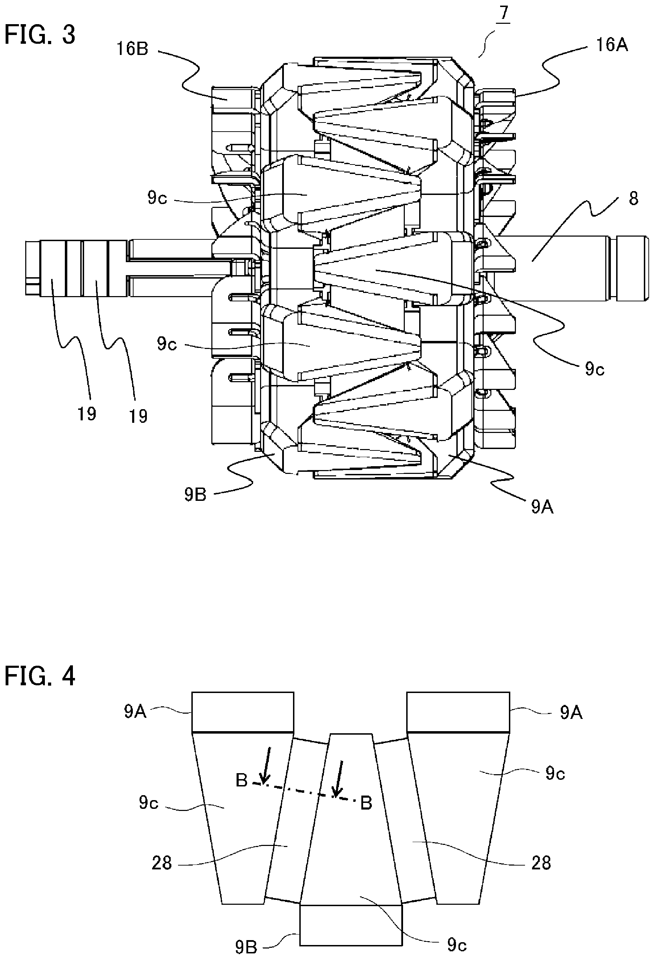

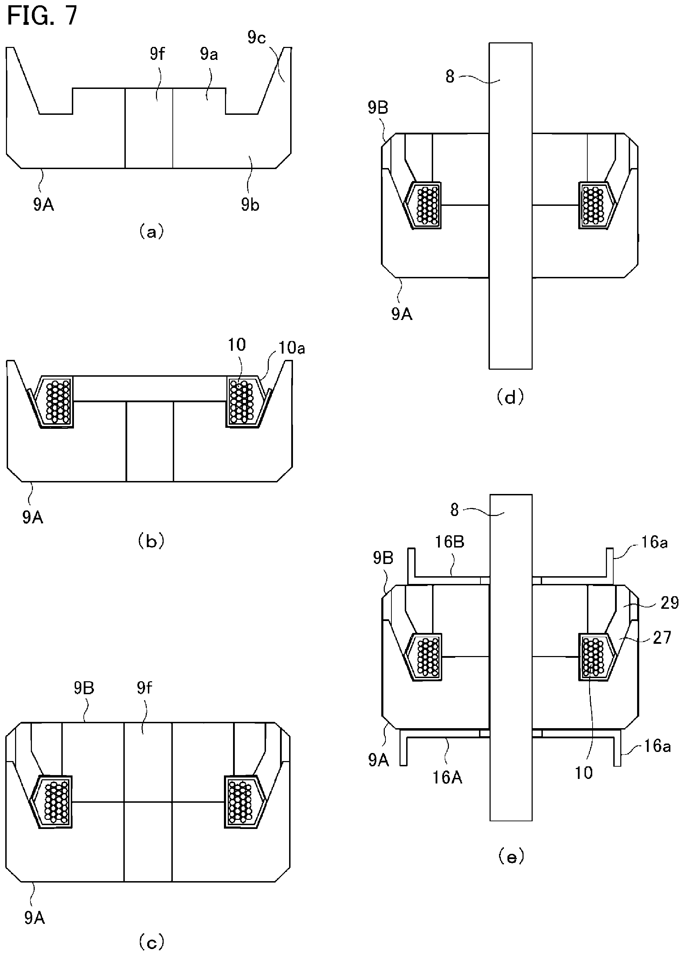

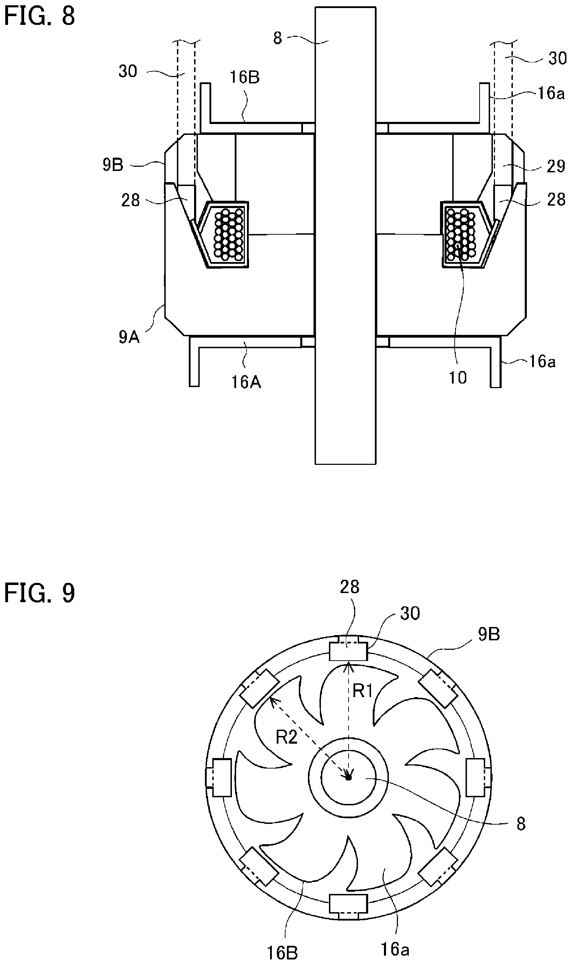

Hereinafter, a rotor of a rotating electric machine for vehicle according to example 1 will be described with reference to the drawings. FIG. 1 is an axial-direction front view of the rotating electric machine for vehicle according to the present example 1, and FIG. 2 is a sectional view of a part indicated by line A-A as seen in the arrow direction in FIG. 1. FIG. 3 to FIG. 6 illustrate the rotor according to the present embodiment 1. FIG. 7 and FIG. 8 illustrate a method for manufacturing a rotor according to the present example 1. In the drawings, the same or corresponding parts are denoted by the same reference characters.

As shown in FIG. 2, the rotating electric machine 1 for vehicle according to the present example 1 is a control-device-integrated rotating electric machine including a rotating electric machine body 2 and a control device 3 mounted to the rotating electric machine body 2, and is configured as a brush-equipped AC motor/generator to be mounted to a vehicle driven by an internal combustion engine.

The rotating electric machine body 2 includes a cylindrical stator 4, a rotor 7 provided inside the stator 4, a case 11 supporting the stator 4 and the rotor 7, brushes 20, and the like. The stator 4 includes a cylindrical stator core 5 and a stator winding 6 as an armature winding provided to the stator core 5. The stator winding 6 includes one or a plurality of three-phase AC windings each formed by star-connection or delta-connection, whereby AC voltage is induced along with rotation of the rotor.

The rotor 7 includes a rotor shaft 8, a pair of rotor cores 9A, 9B fixed to the rotor shaft 8, and a rotor winding 10 as a field winding surrounded by the rotor cores 9A, 9B. The rotor cores 9A, 9B are Lundell-type cores and form so-called claw-pole-type magnetic poles.

The rotor cores 9A, 9B each have a cylindrical boss portion 9a having a through hole at the center part in the diameter direction, a disk portion 9b provided at an axial-direction end of the boss portion 9a, and a plurality of, e.g., eight claw-shaped magnetic poles 9c extending in the axial direction from the outer circumference of the disk portion 9b. The plurality of claw-shaped magnetic poles 9c are arranged at an equiangular pitch in the circumferential direction.

The pair of rotor cores 9A, 9B configured as described above are arranged so as to be opposed to each other in the axial direction such that end surfaces of their boss portions 9a abut on each other and their claw-shaped magnetic poles 9c are engaged with each other, and the pair of rotor cores 9A, 9B are fixed to the rotor shaft 8 press-fitted to through holes 9f of the boss portions 9a. In addition, bar-shaped permanent magnets 28 are provided in magnet holding portions 27 formed by the claw-shaped magnetic poles 9c adjacent to each other in the circumferential direction.

The case 11 includes a front bracket 12, a rear bracket 13, and fastening bolts 14, made of metal. The stator core 5 is held between the front bracket 12 and the rear bracket 13, and fixed by being fastened with a plurality of fastening bolts 14. The front bracket 12 and the rear bracket 13, which have substantially bowl shapes, each have a plurality of intake holes at the bottom and a plurality of exhaust holes at both shoulder portions on the outer circumference.

The rotor shaft 8 penetrates the front bracket 12 and the rear bracket 13 and are rotatably supported with a pair of bearings 15 respectively provided to the front bracket 12 and the rear bracket 13. The outer circumferences of the rotor cores 9A, 9B are opposed to the inner circumference of the stator 4 with a predetermined gap therebetween. In addition, cooling fans 16A, 16B for blower which are rotated integrally with the rotor 7 are fixed to the axial-direction ends of the rotor cores 9A, 9B.

A pulley 17 is fixed to an axial-direction end on the front bracket 12 side of the rotor shaft 8. A transmission belt (not shown) which moves in conjunction with a rotary shaft of an internal combustion engine (not shown) is wound around the pulley 17, and motive power is transferred via the transmission belt between the rotating electric machine 1 for vehicle and the internal combustion engine. Near the axial-direction end on the rear bracket 13 side of the rotor shaft 8, a rotation position detection sensor 18 for generating a signal according to rotation of the rotor shaft 8 and a pair of slip rings 19 electrically connected to the rotor winding 10, are provided. Each slip ring 19 is formed from an annular conductive member surrounding the outer circumference of the rotor shaft 8.

A pair of brushes 20 formed of a conductive material are held by a brush holder 21 fixed to the rear bracket 13. The brushes 20 are pressed by the pair of pressing springs 22 in a direction to come into contact with the respective slip rings 19. The brushes 20 and the slip rings 19 slide in contact with each other along with rotation of the rotor 7, and field current is supplied from an external battery (not shown) to the rotor winding 10 via the slip rings 19. When field current flows through the rotor winding 10, the claw-shaped magnetic poles 9c of one rotor core 9A (or 9B) are magnetized to be N poles, and the claw-shaped magnetic poles 9c of the other rotor core 9B (or 9A) are magnetized to be S poles.

FIG. 1 shows a state in which a cover 26 of the control device 3 is removed. The control device 3 includes a power module unit 23 in which a power semiconductor device is mounted, a heat sink 24 and a cooling fin 25 for cooling the power module unit 23, and the like. The detailed configuration of the control device 3 is not directly relevant to the present invention and therefore the description thereof is omitted here.

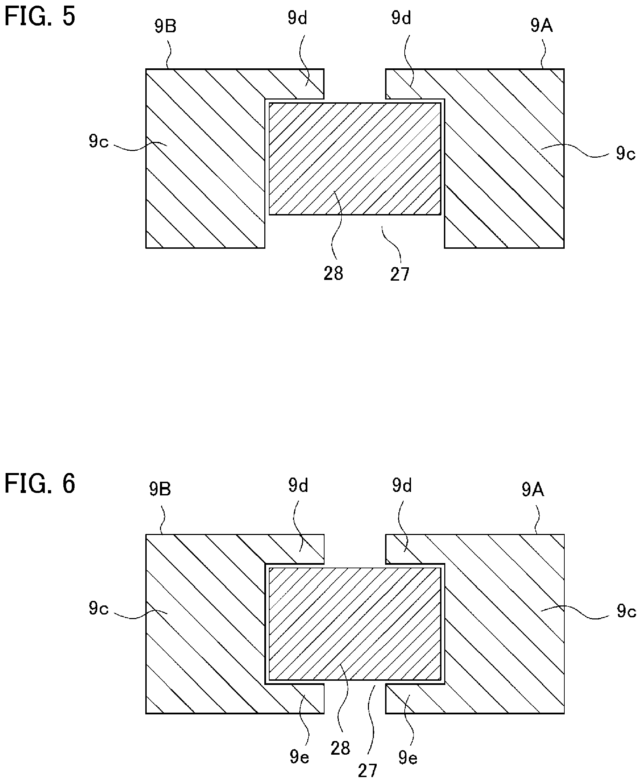

Next, the rotor 7 according to the present example 1 will be described in detail with reference to FIG. 3 to FIG. 6. FIG. 3 is a side view showing the rotor in which permanent magnets are not provided, and FIG. 4 is a partial side view showing the claw-shaped magnetic poles and the permanent magnets of the rotor. FIG. 5 and FIG. 6 are partial sectional views of a part indicated by line B-B as seen in the arrow direction in FIG. 4, and in the drawings, the upper side is the radially outer side of the rotor and the lower side is the radially inner side of the rotor.

As shown in FIG. 3, in the rotor 7, the claw-shaped magnetic poles 9c of the rotor cores 9A, 9B are engaged with each other and each claw-shaped magnetic pole 9c of one rotor core 9A and each claw-shaped magnetic pole 9c of the other rotor core 9B are arranged so as to be adjacent to each other in the circumferential direction. As shown in FIG. 4, the bar-shaped permanent magnets 28 are provided between the claw-shaped magnetic poles 9c adjacent to each other in the circumferential direction. Each permanent magnet 28 is magnetized in such a direction as to reduce a leakage magnetic flux between the two claw-shaped magnetic poles 9c adjacent to each other with the permanent magnet 28 therebetween. Arranging the permanent magnets 28 in the rotor 7 enables a magnetic flux to be assuredly passed between the stator 4 and the claw-shaped magnetic poles 9c.

As shown in FIG. 5, at the outer-diameter-side ends of the claw-shaped magnetic poles 9c of the rotor cores 9A, 9B, flange portions 9d are provided so as to prevent the permanent magnets 28 from coming off outward in the radial direction due to a centrifugal force. As shown in a modification in FIG. 6, flange portions 9e may be provided at the inner-diameter-side ends of the claw-shaped magnetic poles 9c, whereby each permanent magnet 28 can be easily positioned in the magnet holding portion 27.

The method for manufacturing the rotor 7 according to the present example 1 will be described with reference to FIG. 7 and FIG. 8. First, as shown in FIG. 7(a), one rotor core 9A is prepared which has the cylindrical boss portion 9a having the through hole 9f at the center portion in the diameter direction, the disk portion 9b provided at the axial-direction end of the boss portion 9a, and the plurality of claw-shaped magnetic poles 9c extending in the axial direction from the outer circumference of the disk portion 9b.

Subsequently, as shown in FIG. 7(b), the rotor winding 10 wound around a bobbin 10a made of a resin material is fixed to the one rotor core 9A. Next, as shown in FIG. 7(c), the other rotor core 9B is combined with the one rotor core 9A. Thus, the pair of rotor cores 9A, 9B are arranged so as to be opposed to each other in the axial direction with their claw-shaped magnetic poles 9c engaged with each other. Further, as shown in FIG. 7(d), the rotor shaft 8 is press-fitted to the through holes 9f provided in the pair of rotor cores 9A, 9B.

Subsequently, as shown in FIG. 7(e), the cooling fans 16A, 16B are fixed, by resistance welding, to the axial-direction end surfaces of the pair of rotor cores 9A, 9B into which the rotor shaft 8 has been press-fitted. The cooling fans 16A, 16B each have a plurality of blades 16a. The welding method for the cooling fans 16A, 16B is not limited to resistance welding but may be laser welding.

At least one (in FIG. 7(e), rotor core 9B) of the pair of rotor cores 9A, 9B has a cooling air passage 29 through which cooling air for cooling the permanent magnets 28 passes. The cooling air passage 29 is an opening portion communicating with the magnet holding portion 27. The cooling fan 16B is provided at the axial-direction end surface of the rotor core 9B so as not to overlap an end of the cooling air passage 29 in the axial direction. Another cooling fan 16A is fixed to the axial-direction end surface of the rotor core 9A.

Subsequently, the permanent magnet 28 is inserted into each magnet holding portion 27 from the axial-direction end surface side of the rotor core 9B. As shown in FIG. 8, the cooling fan 16B fixed to the axial-direction end surface of the rotor core 9B is located so as not to interfere with an area on an extension line in the longitudinal direction of the permanent magnet 28 in the magnet holding portion 27, i.e., an insertion path 30 through which the permanent magnet 28 is inserted into the magnet holding portion 27. Through the above process, the rotor 7 according to the present example 1 is completed.

FIG. 9 is a schematic view showing the axial-direction end surface of one rotor core of the rotor shown in FIG. 8. In FIG. 9, for convenience sake, the blades 16a are drawn two-dimensionally, but they are actually formed three-dimensionally. In addition, the insertion path 30 which is the area on the extension line in the longitudinal direction of the permanent magnet 28 is actually not perpendicular to the drawing plane. In FIG. 9, the position of the insertion path 30 when the axial-direction end surface of the rotor core 9B is viewed from the front side is shown. On the axial-direction end surface of the rotor core 9B, a longest distance R2 from the center of the rotor shaft 8 to the outer periphery of the blade 16a of the cooling fan 16B is set to be smaller than a shortest distance R1 from the center of the rotor shaft 8 to the insertion path 30 (R1 > R2).

In the present example 1, the permanent magnets 28 are inserted into the magnet holding portions 27 from the axial-direction end surface side of one of the pair of rotor cores 9A, 9B. However, the permanent magnets 28 may be inserted from both sides. In this case, the cooling fans 16B that do not interfere with the insertion paths 30 for the permanent magnets 28 need to be provided at the axial-direction end surfaces on both sides.

As described above, in the rotor 7 of the rotating electric machine 1 for vehicle according to the present example 1, the cooling fan 16B fixed to the axial-direction end surface of at least one of the pair of rotor cores 9A, 9B is located so as not to interfere with the area on the extension line in the longitudinal direction of each permanent magnet 28, i.e., the insertion path 30 for each permanent magnet 28. Therefore, it is possible to provide the permanent magnets 28 into the magnet holding portions 27 in a state in which the cooling fans 16B, 16B are fixed to the axial-direction end surfaces. Thus, the permanent magnets 28 are not influenced by a magnetic field or heat caused when the cooling fans 16A, 16B are welded. Therefore, leakage of a magnetic flux between the claw-shaped magnetic poles 9c can be assuredly prevented.

In addition, in the method for manufacturing the rotor 7 according to the present example 1, the permanent magnets 28 can be inserted into the magnet holding portions 27 after the cooling fans 16A, 16B are fixed to the axial-direction end surfaces of the pair of rotor cores 9A, 9B by welding. Therefore, the manufacturing can be performed while welding of the cooling fans 16A, 16B does not influence the magnetic force of the permanent magnets 28. Thus, it is possible to avoid such a trouble in which the permanent magnets 28 are demagnetized or are magnetized in undesired directions due to a magnetic field or heat caused when the cooling fans 16A, 16B are welded.

In addition, since the cooling fan 16B is provided so as not to overlap the ends of the cooling air passages 29 in the axial direction, cooling air readily flows into the cooling air passages 29, thus providing a high cooling effect on the permanent magnets 28. From the above, according to the present example 1, it is possible to obtain the rotor 7 of the rotating electric machine 1 for vehicle that can assuredly prevent leakage of a magnetic flux between the claw-shaped magnetic poles 9c without adding a new processing step or manufacturing device and without increase in the manufacturing cost, as compared to the conventional manufacturing methods.

### Embodiment 1

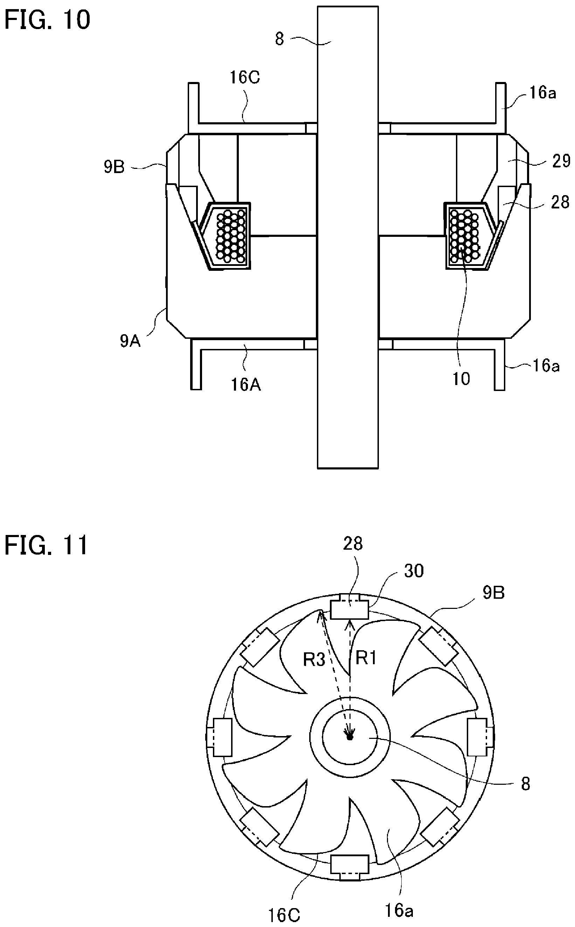

FIG. 10 is a sectional view showing a rotor of a rotating electric machine for vehicle according to embodiment 1 of the present invention, and FIG. 11 is a schematic view showing an axial-direction end surface of one rotor core of the rotor shown in FIG. 10. In FIG. 11, for convenience sake, the blades 16a are drawn two-dimensionally, but they are actually formed three-dimensionally. In addition, the insertion path 30 which is the area on the extension line in the longitudinal direction of the permanent magnet 28 is actually not perpendicular to the drawing plane. In FIG. 11, the position of the insertion path 30 when the axial-direction end surface of the rotor core 9B is viewed from the front side is shown.

As shown in FIG. 10, in the rotor according to the present embodiment 1, a cooling fan 16C having a shape different from the cooling fan 16B in the above example 1 is fixed to the axial-direction end surface of the rotor core 9B. As in the cooling fan 16B, the cooling fan 16C is provided so as not to interfere with the area on the extension line in the longitudinal direction of each permanent magnet 28, i.e., the insertion path 30 for each permanent magnet 28.

As shown in FIG. 11, on the axial-direction end surface of the rotor core 9B, a longest distance R3 from the center of the rotor shaft 8 to the outer periphery of the blade 16a of the cooling fan 16C is set to be greater than the shortest distance R1 from the center of the rotor shaft 8 to the insertion path 30 (R1 < R3). However, each blade 16a of the cooling fan 16C is located so as to avoid the insertion paths 30, and the part at the longest distance R3 of the cooling fan 16C is located between the insertion paths 30 adjacent to each other in the circumferential direction.

The other configurations of the rotor of the rotating electric machine for vehicle according to the present embodiment 1, the entire configuration of the rotating electric machine for vehicle, and the method for manufacturing the rotor are the same as those in the above example 1, and therefore the description thereof is omitted here. The cooling fan 16B in the above example 1 has seven blades 16a, and the cooling fan 16C in the present embodiment 2 has eight blades 16a. However, the number or the shape of the blades of the cooling fan in the present invention is not particularly limited.

In the present embodiment 1, the same effects as in the above example 1 are provided, and in addition, since the longest distance R3 to the outer periphery of the blade 16a of the cooling fan 16C is greater than that in the above example 1, cooling performance of the rotor 7 is improved. It is noted that various modifications of the above described embodiments of the invention would be apparent to those skilled in the art, without departing from the scope of the invention which is defined by the appended claims.

### DESCRIPTION OF THE REFERENCE CHARACTERS

- 1: rotating electric machine for vehicle
- 2: rotating electric machine body
- 3: control device
- 4: stator
- 5: stator core
- 6: stator winding
- 7: rotor
- 8: rotor shaft
- 9A, 9B: rotor core
- 9a: boss portion
- 9b: disk portion
- 9c: claw-shaped magnetic pole
- 9d, 9e: flange portion
- 9f: through hole
- 10: rotor winding
- 10a: bobbin
- 11: case
- 12: front bracket
- 13: rear bracket
- 14: fastening bolt
- 15: bearing
- 16A, 16B, 16C: cooling fan
- 16a: blade
- 17: pulley
- 18: rotation position detection sensor
- 19: slip ring
- 20: brush
- 21: brush holder
- 22: pressing spring
- 23: power module unit
- 24: heat sink
- 25: cooling fin
- 26: cover
- 27: magnet holding portion
- 28: permanent magnet
- 29: cooling air passage
- 30: insertion path

## Claims

1. A rotor of a rotating electric machine for vehicle, the rotor comprising:
a pair of rotor cores (9A, 9B) each having a plurality of claw-shaped magnetic poles (9c) at an outer circumference thereof, the pair of rotor cores (9A, 9B) being provided so as to be opposed to each other in an axial direction such that the claw-shaped magnetic poles (9c) of the pair of rotor cores (9A, 9B) are engaged with each other;
a rotor shaft (8) to which the pair of rotor cores (9A, 9B) are fixed;
a bar-shaped permanent magnet (28) provided at a magnet holding portion (27) formed by the claw-shaped magnetic poles (9c) adjacent to each other in a circumferential direction; and
cooling fans (16A, 16B, 16C) fixed to axial-direction end surfaces of the pair of rotor cores (9A, 9B), wherein
the cooling fan (16B, 16C) fixed to the axial-direction end surface of at least one of the pair of rotor cores (9A, 9B) is located so as not to interfere with an insertion path (30) through which the permanent magnet (28) is inserted, which is an area on an extension line in a longitudinal direction of the permanent magnet (28),
a longest distance R3 from a center of the rotor shaft (8) to the outer periphery of a blade (16a) of the cooling fan (16C) is set to be greater than the shortest distance (R1) from the center of the rotor shaft (8) to the insertion path (30) of the permanent magnet (28), wherein the cooling fan (16B, 16C) is arranged so as to avoid the insertion path (30) of the permanent magnet (28)

2. The rotor of a rotating electric machine for vehicle according to claim 1, wherein
the pair of rotor cores (9A, 9B) have a cooling air passage (29) communicating with the magnet holding portion (27), and
the cooling fan (16B, 16C) fixed to the axial-direction end surface of at least one of the pair of rotor cores (9A, 9B) is located so as not to overlap an end of the cooling air passage (29) in the axial direction.

3. A method for manufacturing a rotor of a rotating electric machine for vehicle, the method comprising the steps of:
press-fitting a rotor shaft (8) into a pair of rotor cores (9A, 9B) each having a plurality of claw-shaped magnetic poles (9c) at an outer circumference thereof, the pair of rotor cores (9A, 9B) being provided so as to be opposed to each other in an axial direction such that the claw-shaped magnetic poles (9c) of the pair of rotor cores (9A, 9B) are engaged with each other;
fixing cooling fans (16A, 16B, 16C), by welding, to axial-direction end surfaces of the pair of rotor cores (9A, 9B) into which the rotor shaft (8) has been press-fitted; and
inserting a bar-shaped permanent magnet (28) into a magnet holding portion (27) formed by the claw-shaped magnetic poles (9c) adjacent to each other in a circumferential direction of the pair of rotor cores (9A, 9B) to which the cooling fans (16A, 16B, 16C) have been fixed, from an axial-direction end surface side of at least one of the pair of rotor cores (9A, 9B), wherein
the cooling fan (16B, 16C) fixed to the axial-direction end surface, of the pair of rotor cores (9A, 9B), on a side to which the permanent magnet (28) is inserted is located so as not to interfere with an insertion path (30), which is an area on an extension line in a longitudinal direction of the permanent magnet (28), through which the permanent magnet (28) is inserted into the magnet holding portion (27).

4. The method for manufacturing a rotor of a rotating electric machine for vehicle, according to claim 3, wherein
on the axial-direction end surface, of the pair of rotor cores (9A, 9B), on a side to which the permanent magnet (28) is inserted, a longest distance (R2) from a center of the rotor shaft (8) to an outer periphery of a blade (16a) of the cooling fan (16B) is smaller than a shortest distance (R1) from the center of the rotor shaft (8) to the insertion path (30).

5. The method for manufacturing a rotor of a rotating electric machine for vehicle, according to claim 3, wherein
on the axial-direction end surface, of the pair of rotor cores (9A, 9B), on a side to which the permanent magnet (28) is inserted, a longest distance (R3) from a center of the rotor shaft (8) to an outer periphery of a blade (16a) of the cooling fan (16C) is greater than a shortest distance (R1) from the center of the rotor shaft (8) to the insertion path (30), and the cooling fan (16C) is located so as to avoid the insertion path (30).

## Patentansprüche

1. Rotor einer rotierenden elektrischen Maschine für ein Fahrzeug, wobei der Rotor aufweist:
ein Paar von Rotorkernen (9A, 9B), die jeweils mehrere klauenförmige Magnetpole (9c) an einem Außenumfang von ihnen aufweisen, wobei das Paar von Rotorkernen (9A, 9B) so ausgebildet ist, dass die Rotorkerne (9A, 9B) einander in axialer Richtung gegenüberliegen, sodass die klauenförmigen Magnetpole (9c) des Paars von Rotorkernen (9A, 9B) miteinander in Eingriff stehen;
eine Rotorwelle (8), an der das Paar von Rotorkernen (9A, 9B) befestigt ist;
einen stabförmigen Permanentmagneten (28), der an einem Magnethalteabschnitt (27) angeordnet ist, der durch die klauenförmigen Magnetpole (9c) gebildet ist, die in einer Umfangsrichtung nebeneinander liegen; und
Kühlventilatoren (16A, 16B, 16C), die an den axialen Endflächen des Paars von Rotorkernen (9A, 9B) befestigt sind, wobei
der an der axialen Endfläche von mindestens einem Rotorkern des Paars von Rotorkernen (9A, 9B) befestigte Kühlventilator (16B, 16C) so angeordnet ist, dass er nicht mit einem Einsetzpfad (30), durch den der Permanentmagnet (28) eingesetzt wird, der ein Bereich auf einer Verlängerungslinie in einer Längsrichtung des Permanentmagneten (28), überschneidet,
wobei ein längster Abstand R3 von einer Mitte der Rotorwelle (8) zum äußeren Umfang einer Schaufel (16a) des Kühlventilators (16C) so bemessen ist, dass er größer als der kürzeste Abstand (R1) von der Mitte der Rotorwelle (8) zu dem Einsetzpfad (30) des Permanentmagneten (28) ist, wobei der Kühlventilator (16B, 16C) so angeordnet ist, dass er den Einsetzpfad (30) des Permanentmagneten (28) nicht überschneidet.

2. Rotor einer rotierenden elektrischen Maschine für Fahrzeuge nach Anspruch 1, wobei
das Paar von Rotorkernen (9A, 9B) einen Kühlluftdurchgang (29) aufweist, der mit dem Magnethalteabschnitt (27) in Verbindung steht, und
der an der axialen Endfläche von mindestens einem Rotorkern des Paars von Rotorkernen (9A, 9B) befestigte Kühlventilator (16B, 16C) so angeordnet ist, dass er ein Ende des Kühlluftdurchgangs (29) in axialer Richtung nicht überschneidet.

3. Verfahren zur Herstellung eines Rotors einer rotierenden elektrischen Maschine für Fahrzeuge, wobei das Verfahren folgende Schritte umfasst:
Einpressen einer Rotorwelle (8) in ein Paar von Rotorkernen (9A, 9B), die jeweils mehrere klauenförmige Magnetpole (9c) an einem Außenumfang von ihnen aufweisen, wobei das Paar von Rotorkernen (9A, 9B) so ausgebildet ist, dass die Rotorkerne (9A, 9B) einander in einer axialen Richtung gegenüberliegen, sodass die klauenförmigen Magnetpole (9c) des Paars von Rotorkernen (9A, 9B) miteinander in Eingriff stehen;
Anbringen von Kühlventilatoren (16A, 16B, 16C) durch Anschweißen an axiale Endflächen des Paars von Rotorkernen (9A, 9B), in die die Rotorwelle (8) eingepresst wurde; und
Einsetzen eines stabförmigen Permanentmagneten (28) von einer Seite einer axialen Endfläche von mindestens einem Rotorkern des Paars von Rotorkernen (9A, 9B) in einen Magnethalteabschnitt (27), der durch die klauenförmigen Magnetpole (9c) gebildet wird, die in einer Umfangsrichtung des Paars von Rotorkernen (9A, 9B), an denen die Kühllüfter (16A, 16B, 16C) angebracht wurden, nebeneinander liegen, wobei
der an der axialen Endfläche des Paars von Rotorkernen (9A, 9B), auf einer Seite, auf der der Permanentmagnet (28) eingesetzt wird, befestigte Kühlventilator (16B, 16C) so angeordnet ist, dass er den Einsetzpfad (30), der ein Bereich auf einer Verlängerungslinie in einer Längsrichtung des Permanentmagneten (28) ist, durch den der Permanentmagnet (28) in den Magnethalteabschnitt (27) eingesetzt wird, nicht überschneidet.

4. Verfahren zur Herstellung eines Rotors einer rotierenden elektrischen Maschine für Fahrzeuge nach Anspruch 3, wobei
an der axialen Endfläche des Paares von Rotorkernen (9A, 9B) auf einer Seite, auf der der Permanentmagnet (28) eingesetzt wird, ein längster Abstand (R2) von einer Mitte der Rotorwelle (8) zu einem äußeren Umfang einer Schaufel (16a) des Kühlventilators (16B) kleiner als ein kürzester Abstand (R1) von der Mitte der Rotorwelle (8) zu dem Einsetzpfad (30) ist.

5. Verfahren zur Herstellung eines Rotors einer rotierenden elektrischen Maschine für Fahrzeuge nach Anspruch 3, wobei
an der axialen Endfläche des Paars von Rotorkernen (9A, 9B) auf einer Seite, auf der der Permanentmagnet (28) eingesetzt wird, ein längster Abstand (R3) von einer Mitte der Rotorwelle (8) zu einem äußeren Umfang einer Schaufel (16a) des Kühlventilators (16C) größer ist als ein kürzester Abstand (R1) von der Mitte der Rotorwelle (8) zu dem Einsetzpfad (30), und
der Kühlventilator (16C) so angeordnet ist, dass er den Einsetzpfad (30) nicht überschneidet.

## Revendications

1. Rotor d'une machine électrique tournante pour véhicule, le rotor comprenant :
une paire de noyaux de rotor (9A, 9B) présentant chacun une pluralité de pôles magnétiques en forme de griffe (9c) au niveau d'une circonférence extérieure de ceux-ci, la paire de noyaux de rotor (9A, 9B) étant prévue de manière à être opposée l'une à l'autre dans une direction axiale de sorte que les pôles magnétiques en forme de griffe (9c) de la paire de noyaux de rotor (9A, 9B) sont engagés l'un avec l'autre ;
un arbre de rotor (8) auquel la paire de noyaux de rotor (9A, 9B) est fixée ;
un aimant permanent en forme de barre (28) prévu au niveau d'une partie de maintien d'aimant (27) formée par les pôles magnétiques en forme de griffe (9c) adjacents l'un à l'autre dans une direction circonférentielle ; et
des ventilateurs de refroidissement (16A, 16B, 16C) fixés à des surfaces d'extrémité en direction axiale de la paire de noyaux de rotor (9A, 9B), dans lequel
le ventilateur de refroidissement (16B, 16C) fixé à la surface d'extrémité en direction axiale d'au moins un de la paire de noyaux de rotor (9A, 9B) est situé de manière à ne pas interférer avec un chemin d'insertion (30) à travers lequel l'aimant permanent (28) est inséré, qui est une zone sur une ligne d'extension dans une direction longitudinale de l'aimant permanent (28),
une distance R3 la plus longue d'un centre de l'arbre de rotor (8) à la périphérie extérieure d'une pale (16a) du ventilateur de refroidissement (16C) est définie de façon à être supérieure à la distance la plus courte (R1) du centre de l'arbre de rotor (8) au chemin d'insertion (30) de l'aimant permanent (28), dans lequel
le ventilateur de refroidissement (16B, 16C) est agencé de manière à éviter le chemin d'insertion (30) de l'aimant permanent (28).

2. Rotor d'une machine électrique tournante pour véhicule selon la revendication 1, dans lequel
la paire de noyaux de rotor (9A, 9B) présente un passage d'air de refroidissement (29) communiquant avec la partie de maintien d'aimant (27), et
le ventilateur de refroidissement (16B, 16C) fixé à la surface d'extrémité en direction axiale d'au moins un de la paire de noyaux de rotor (9A, 9B) est situé de manière à ne pas chevaucher une extrémité du passage d'air de refroidissement (29) dans la direction axiale.

3. Procédé de fabrication d'un rotor d'une machine électrique tournante pour véhicule, le procédé comprenant les étapes consistant à :
emmancher un arbre de rotor (8) dans une paire de noyaux de rotor (9A, 9B) présentant chacun une pluralité de pôles magnétiques en forme de griffe (9c) au niveau d'une circonférence extérieure de ceux-ci, la paire de noyaux de rotor (9A, 9B) étant prévue de manière à être opposée l'une à l'autre dans une direction axiale de sorte que les pôles magnétiques en forme de griffe (9c) de la paire de noyaux de rotor (9A, 9B) sont engagés l'un avec l'autre ;
fixer des ventilateurs de refroidissement (16A, 16B, 16C), par soudage, sur des surfaces d'extrémité en direction axiale de la paire de noyaux de rotor (9A, 9B) dans lesquels l'arbre de rotor (8) a été emmanché ; et
insérer un aimant permanent en forme de barre (28) dans une partie de maintien d'aimant (27) formée par les pôles magnétiques en forme de griffe (9c) adjacents l'un à l'autre dans une direction circonférentielle de la paire de noyaux de rotor (9A, 9B) auxquels les ventilateurs de refroidissement (16A, 16B, 16C) ont été fixés, à partir d'un côté de surface d'extrémité en direction axiale d'au moins un de la paire de noyaux de rotor (9A, 9B), dans lequel
le ventilateur de refroidissement (16B, 16C) fixé à la surface d'extrémité en direction axiale de la paire de noyaux de rotor (9A, 9B), sur un côté auquel l'aimant permanent (28) est inséré, est situé de manière à ne pas interférer avec un chemin d'insertion (30), qui est une zone sur une ligne d'extension dans une direction longitudinale de l'aimant permanent (28), à travers laquelle l'aimant permanent (28) est inséré dans la partie de maintien d'aimant (27).

4. Procédé de fabrication d'un rotor d'une machine électrique tournante pour véhicule selon la revendication 3, dans lequel
sur la surface d'extrémité en direction axiale de la paire de noyaux de rotor (9A, 9B), sur un côté auquel l'aimant permanent (28) est inséré, une distance la plus longue (R2) d'un centre de l'arbre de rotor (8) à une périphérie extérieure d'une pale (16a) du ventilateur de refroidissement (16B) est inférieure à une distance la plus courte (R1) du centre de l'arbre de rotor (8) au chemin d'insertion (30).

5. Procédé de fabrication d'un rotor d'une machine électrique tournante pour véhicule selon la revendication 3, dans lequel
sur la surface d'extrémité en direction axiale de la paire de noyaux de rotor (9A, 9B), sur un côté auquel l'aimant permanent (28) est inséré, une distance la plus longue (R3) d'un centre de l'arbre de rotor (8) à une périphérie extérieure d'une pale (16a) du ventilateur de refroidissement (16C) est supérieure à une distance la plus courte (R1) du centre de l'arbre de rotor (8) au chemin d'insertion (30), et le ventilateur de refroidissement (16C) est situé de manière à éviter le chemin d'insertion (30).
